Europäisches Patentamt

European Patent Office

Office européen des brevets

(19)

(11) Veröffentlichungsnummer: **0 294 500 B1**

# EUROPÄISCHE PATENTSCHRIFT

(12)

(45) Veröffentlichungstag der Patentschrift: **25.03.92**

(21) Anmeldenummer: **87108302.8**

(22) Anmeldetag: **09.06.87**

(51) Int. Cl.⁵: **F28D 20/00,** B60H 1/00, F02N 17/06

(54) **Wärmespeicher, insbesondere für durch Motorabwärme gespeiste Kraftfahrzeugheizungen.**

(43) Veröffentlichungstag der Anmeldung:
**14.12.88 Patentblatt 88/50**

(45) Bekanntmachung des Hinweises auf die
Patenterteilung:
**25.03.92 Patentblatt 92/13**

(84) Benannte Vertragsstaaten:
**ES FR GB IT SE**

(56) Entgegenhaltungen:
**DE-A- 2 622 008          DE-A- 2 745 492
DE-A- 2 854 473          DE-A- 2 946 043
DE-A- 3 029 068          DE-A- 3 145 205
DE-A- 3 212 043          DE-A- 3 300 946**

(73) Patentinhaber: **Schatz, Oskar, Dr.-Ing.
Zugspitzstrasse 64
W-8035 Gauting(DE)**

(72) Erfinder: **Schatz, Oskar, Dr.-Ing.
Zugspitzstrasse 64
W-8035 Gauting(DE)**

(74) Vertreter: **Lamprecht, Helmut, Dipl.-Ing.
Corneliusstrasse 42
W-8000 München 5(DE)**

**Beschreibung**

Die Erfindung betrifft einen Wärmespeicher, insbesondere einen Latentwärmespeicher für durch Motorabwärme gespeiste Kraftfahrzeugheizungen, mit einem einen Speicherkern umschließenden inneren Wärmespeichergehäuse, mit einem zur Umgebung abgrenzenden äußeren Wärmespeichergehäuse und mit einer Wärmeisolierung zwischen dem inneren und dem äußeren Wärmespeichergehäuse, welche durch eine Zuflußleitung und eine Abflußleitung für ein wärmetransportierendes Übertragungsmittel durchbrochen wird.

Die beim Betrieb von Kraftfahrzeugen anfallende Abfallwärme, die z.B. im Kühlwasser zur Verfügung steht, wird zur Beheizung des Fahrzeuginnenraums nutzbar gemacht, steht aber derzeit nach einem Kaltstart erst nach einer gewissen Anlaufzeit zur Verfügung und auch dann nur im wesentlichen während der Betriebszeit des Motors. Nach dem Erreichen der optimalen Betriebstemperatur des Motors wird ein großer Teil dieser Abfallwärme meist nutzlos abgeführt.

Es ist z.B. in der DE-OS 32 45 027 bereits vorgeschlagen worden, diese Abfallwärme für Zeiten des Wärmebedarfs zu speichern und sie z.B. zur Vorwärmung des Motors zur Verbesserung des Kaltstarts einzusetzen. Dabei erscheint ein Latentwärmespeicher wegen seines bei einer gegebenen Speicherkapazität geringen Bauvolumens und geringen Gewichts als besonders geeignet.

Damit die während des Motorbetriebs gespeicherte Wärme auch nach einer längeren Betriebsruhe, z.B. nach einer nächtlichen Ruhepause, für die sofortige Erwärmung des Motors oder des Fahrzeuginnenraums zur Verfügung steht, müssen die Wärmeverluste des Wärmespeichers möglichst gering gehalten werden.

Der von einem Gehäuse umschlossene Wärmespeicher wird deshalb von einem zweiten Gehäuse umschlossen, wobei zwischen beiden Gehäusen eine thermisch isolierene Kammer ausgebildet ist. Diese Kammer kann ein Vakuum oder thermisch isolierende Pulver oder Faserstoffe oder eine Kombination aus Vakuum und Isolierstoffen enthalten. Diese thermisch isolierende Kammer wird von der Zufluß- und der Abflußleitung durchquert, durch welche Wärmeverluste durch Konvektion und Wärmeleitung des Strömungsmittels, z.B. des Motorkühlwassers oder des Motorabgases, verursacht werden können.

Der Erfindung liegt die Aufgabe zugrunde, einen Wärmespeicher der eingangs genannten Art so auszugestalten, daS die durch die Zu- und Abflußleitungen verursachten Wärmeverluste möglichst gering gehalten werden.

Die Lösung dieser Aufgabe besteht darin, daß in der Einbaulage des Wärmespeichers die in das innere Wärmespeichergehäuse mündenden Leitungen im Bereich der Wärmeisolierung, jeweils einen zumindest annähernd vertikalen Abschnitt aufweisen, dessen oberes Ende mit dem inneren Wärmespeichergehäuse verbunden ist und dessen vertikale Länge ausgehend von dem Temperaturgefälle zwischen dem Speicherkern und der Umgebung und der Wärmeleitfähigkeit des Übertragungsmittels so groß ist, daß eine ausreichend große Sperrschicht innerhalb der Wärmeisolierung zur Schaffung einer ausreichenden Isolationswirkung geschaffen wird, und daß dieser zumindest annähernd vertikale Abschnitt quer zu seiner Längsachse sowohl gegenüber dem inneren als auch gegenüber dem äußeren Wärmespeichergehäuse wärmeisoliert ist.

Durch diese Gestaltung wird in den Leitungen dann, wenn nach Beendigung z.B. des Kühlwasserdurchflusses durch den Wärmespeicher, z.B. durch Abstellen des Motors, das ausserhalb des Wärmespeichers befindliche Medium abkühlt, in dem etwa vertikal nach unten führenden Abschnitt eine ruhende Sperrschicht zwischen dem im Wärmespeicher befindlichen heißen Übertragungsmittel und dem kühleren Übertragungsmittel außerhalb gebildet, weil infolge der unterschiedlichen spezifischen Dichte das kühle Übertragungsmittel unten, das heiße Übertragungsmittel dagegen oben bleibt und dadurch Wärmeverluste durch Konvektion verhindert werden.

Beim Einsatz eines derartigen Wärmespeichers in räumlich beengten Verhältnissen, wie sie in der Regel bei Kraftfahrzeugen anzutreffen sind, muß die Gesamtabmessung des Wärmespeichers so gering wie möglich gehalten werden. Es ist deshalb anzustreben, daß durch die Anordnung eines ausreichend großen, vertikal verlaufenden Leitungsabschnitts zur Ausbildung einer ausreichend großen Sperrschicht innerhalb der Wärmeisolierung die äußere Abmessung des Wärmespeichers möglichst wenig vergrößert wird.

Eine zweckmäßige Ausgestaltung der Erfindunhg besteht deshalb darin, daß bei seitlich aus dem inneren Wärmespeichergehäuse austretenden Leitungen die Leitungen nahe der oberen Begrenzung des inneren Wärmespeichergehäuses mit einem von diesem Gehäuse wegführenden Abschnitt austreten, um dann in einen innerhalb der Wärmeisolierung zumindest annähernd vertikal nach unten geführten Abschnitt überzugehen. Dabei kann bei einem Wärmespeicher, dessen längste Abmessung in Einbaulage etwa horizontal verläuft, zur Aufnahme der durch die Wärmeisolierung geführten Leitungen das äußere Wärmespeichergehäuse unter Beibehaltung seines vertikalen Querschnitts in horzontaler Richtung verlängert sein, wodurch sich eine besonders einfache äußere Form des Wärmespeichers ergibt. Bei weiter beengten räumlichen Verhältnissen ist die Verlängerung des Gesamtquerschnitts des äußeren Wärmespeichergehäuses gegebenenfalls störend, weshalb eine andere zweckmäßige Ausführungsform darin besteht, daß die von der Wand des inneren Wärmespeichergehäuses wegführenden Abschnitte der Leitungen durch eine Öffnung in der dieser Wand gegenüberliegenden Wand des äußeren Wärmespeichergehäuses geführt sind, daß der Rand der Öffnung allseits einen Abstand von den Leitungen einhält und daß sich an den Rand der Öffnungen ein die Leitungen allseits mit Abstand umschließender, sich zumindest über einen Tail des zumindest annähernd vertikalen Abschnitts der Leitungen erstreckender, durch eine von den Leitungen durchquerte Stirnwand abgeschlossener Mantel anschließt, der einen Abschnitt der Wärmeisolierung umschließt. Dabei kann der Mantel die Zufluß- und die Abflußleitung gemeinsam umschließen oder es kann sowohl der Zufluß- als auch der Abflußleitung jeweils ein Mantel zugeordnet sein.

Bei einem Wärmespeicher, dessen längste Abmessung in Einbaulage im wesentlichen etwa vertikal verläuft und bei welchem die Leitungen an der Unterseite des inneren Wärmespeichergehäuses austreten, besteht eine weitere zweckmäßige Ausgestaltung darin, daß die Unterseite des Wärmespeichergehäuses mit einer nach oben eingezogenen Tasche versehen ist, welche in etwa vertikaler Richtung von den Leitungen durchquert wird.

Anhand der nun folgenden Beschreibung der in der Zeichnung dargestellten Ausführungsbeispiele der Erfindung wird diese näher erläutert.

Es zeigt:

Fig. 1 eine teilweise geschnittene Seitenansicht einer ersten Ausführungsform eines Latentwärmespeichers für Fahrzeugheizungen in zylindrischer Ausführung mit in Einbaulage horizontaler Achse,

Fig. 2 eine teilweise geschnittene Seitenansicht einer zweiten Ausführungsform eines Latentwärmespeichers dieser Art,

Fig. 3 eine teilweise geschnittene Ansicht des in Fig. 2 dargestellten Latentwärmespeichers von oben,

Fig. 4 einen Schnitt durch eine quaderförmige Ausführungsform eines Latentwärmespeichers für Fahrzeugheizungen, dessen längere Kanten in vertikaler Richtung verlaufen,

Fig. 5 einen Schnitt nach der Linie V-V in Fig. 4,

Fig. 6 einen Vertikalschnitt durch eine weitere, zylindrische Ausführungsform eines Latentwärmespeichers für Fahrzeugheizungen mit vertikal verlaufender Achse und

Fig. 7 einen Schnitt nach der Linie VII-VII in Fig. 6.

Bei allen Schnittdarstellungen ist die Struktur des Speicherkerns nicht dargestellt. Gleiche oder einander entsprechende Elemente sind mit gleichen Bezugszahlen gekennzeichnet.

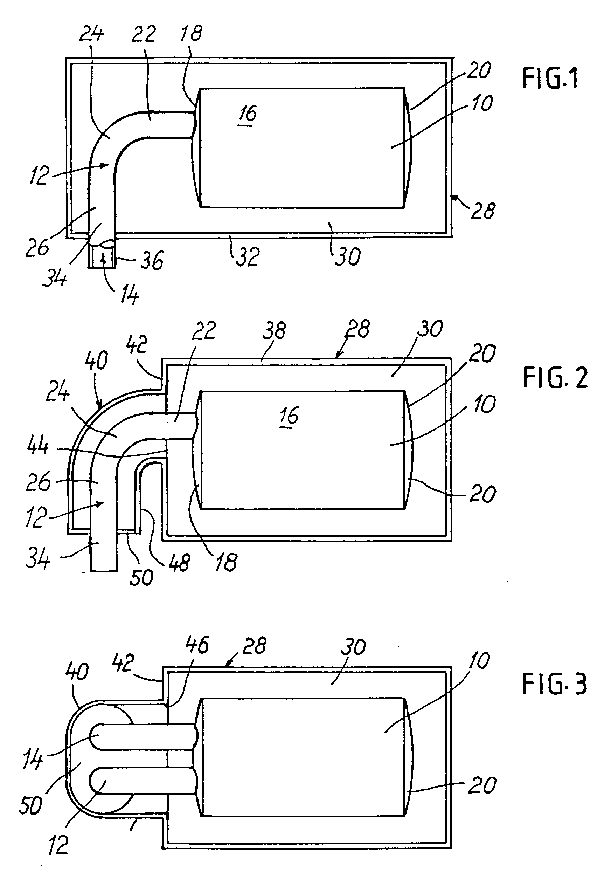

In den Fig. 1 bis 3 sind Wärmespeicher in zylindrischer Bauform dargestellt, bei denen in Einbaulage die Zylinderachse in horizontaler Richtung verläuft. In Fig. 1 bezeichnet 10 ein inneres Wärmespeichergehäuse, welches als die unmittelbar der Wärmespeicherung dienende Einrichtung den Speicherkern enthält. Solche Einrichtungen sind dem Fachmann bekannt, sie können beispielsweise der bereits genannten DE-OS 32 45 027 entnommen werden und werden deshalb hier nicht näher erläutert. Für den Zu-und Abfluß des wärmetransportierenden Übertragungsmittels, als welches hier das Kühlwasser eines Verbrennungsmotors dient, ist eine Zuflußleitung 12 und eine Abflußleitung 14 vorgesehen, die im oberen Bereich des inneren Wärmespeichergehäuses 10 in dieses münden.

Das innere Wärmespeichergehäuse 10 besitzt eine zylindrische Mantelfläche 16 und zwei Stirnflächen 18 und 20. Die beiden Leitungen 12 und 14 sind im oberen Bereich der Stirnfläche 18 angeschlossen. Sie erstrecken sich zunächst in horizontaler Richtung parallel zueinander und gehen dann in einem diesen horizontalen Abschnitt 22 beendenden Bogen 24 in einen vertikalen Abschnitt 26 über, der somit einen Abstand von der Stirnfläche 18 einhält.

Das zylindrische, innere Wärmespeichergehäuse 10 wird allseits mit Abstand von einem mit ihm koaxial angeordneten, äußeren Wärmespeichergehäuse 28 umschlossen, so daß zwischen dem inneren Gehäuse 10 und dem äußeren Gehäuse 28 eine Kammer 30 gebildet wird, die der thermischen Isolation dient und daher entweder ein Vakuum oder ein anderes Isolationsmittel, wie etwa ein pulverförmiges oder faserartiges Isolationsmaterial enthält.

Bei dem in Fig. 1 gezeigten Beispiel verlassen die vertikalen Abschnitte 26 der Zuflußleitung 12 und der Abflußleitung 14 die Kammer 30 durch die Mantelfläche 32 des äußeren Gehäuses, welches auf der der Stirnfläche 18 des inneren Gehäuses 10 benachbarten Seite weiter in axialer Richtung über die Querschnittsebene der Stirnfläche 18 hinausgeführt ist als am anderen Ende über die Querschnittsebene der Stirnfläche 20, so daß ein von den Zu- und Abflußleitungen 12 bzw. 14 durchquerter Bereich der Kammer 30 geschaffen wird.

Der in Fig. 1 gezeigte Wärmetauscher besitzt daher eine einfache äußere Form, die allein durch das zylindrische, äußere Gehäuse 28 bestimmt wird, aus dessen Mantelfläche 32 zwei Anschlußstutzen 34 und 36 herausragen.

Diese Gestalt könnte sich bei sehr beengten räumlichen Verhältnissen als störend erweisen. In den Fig. 2 und 3 ist deshalb eine Ausführungsform dargestellt, welche bei ebenbürtiger thermischer Isolation einen geringeren Platzbedarf aufweist.

Das innere Wärmespeichergehäuse 10 ist unverändert. Die Zuflußleitung 12 und die Abflußleitung 14 münden gleichermaßen im oberen Bereich in die Stirnfläche 18 und setzen sich aus einem horizontalen Abschnitt 22, einem Bogen 24 und einem vertikalen Abschnitt 26 zusammen. Das äußere Gehäuse 28 und die von ihm umschlossene, thermisch isolierende Kammer 30 besitzen eine geänderte Gestalt. An einen das äußere Gehäuse im engeren Sinn darstellenden, zylindrischen Abschnitt 38 schließt sich ein die Zuflußleitung 12 und die Abflußleitung 14 außerhalb dieses zylindrischen Abschnitts 38 einhüllender, rohrförmiger Abschnitt 40 an.

Der zylindrische Abschnitt 38 ist kürzer als das äußere Gehäuse 28 nach der ersten Ausführungsform, weil er über beide Stirnflächen 18 und 20 des inneren Wärmespeichergehäuses 10 in jeweils gleicher Länge hinausragt, und zwar über die Stirnfläche 18 nicht weiter als über die Stirnfläche 20, d.h. um ein Maß, welche die angestrebte Dicke der das innere Wärmespeichergehäuse 10 umgebenden Isolierzone gewährleistet. Die der Stirnfläche 18 des inneren Wärmespeichergehäuses 10 gegenüberliegende Stirnwand 42 des äußeren Gehäuses 28 überquert die Zuflußleitung 12 und die Abflußleitung 14 noch im Bereich des horizontalen Abschnitts 22. Für den Durchtritt dieser Leitungen 12 und 14 ist die Stirnwand 42 mit einer Durchbrechung 44 versehen, deren Rand 46 von den Leitungen 12 und 14 mindestens einen Abstand einhält, der der gewünschten Dicke der durch die Kammer 30 zu bildenden Isolierzone entspricht. An den Rand 46 schließt sich unter Beibehaltung des Querschnitts der Durchbrechung 44 ein die Leitungen 12 und 14 umschließender Mantel 48 an, der dem Bogen 24 folgt und sich dann in Richtung des vertikalen Abschnitts 26 der Leitungen 12 und 14 erstreckt, bis er an einer die Leitungen 12 und 14 eng umschließenden und mit diesen verbundenen Stirnwand 50 endet, wodurch ein winkelförmiger, bereits erwähnter Abschnitt 40 des äußeren Gehäuses 28 gebildet wird, der einen ebenso winkelförmigen Bereich der thermisch isolierenden Kammer 30 umschließt.

Statt beide Leitungen 12 und 14 gemeinsam durch den Abschnitt 40 des äußeren Gehäuses 28 einzuschließen, können - sofern dies wegen der räumlichen Verhältnisse am Einbauort zweckmäßiger erscheint - auch beide Leitungen 12 und 14 jeweils getrennt von einem Abschnitt der thermisch isolierenden Kammer 30 umgeben werden.

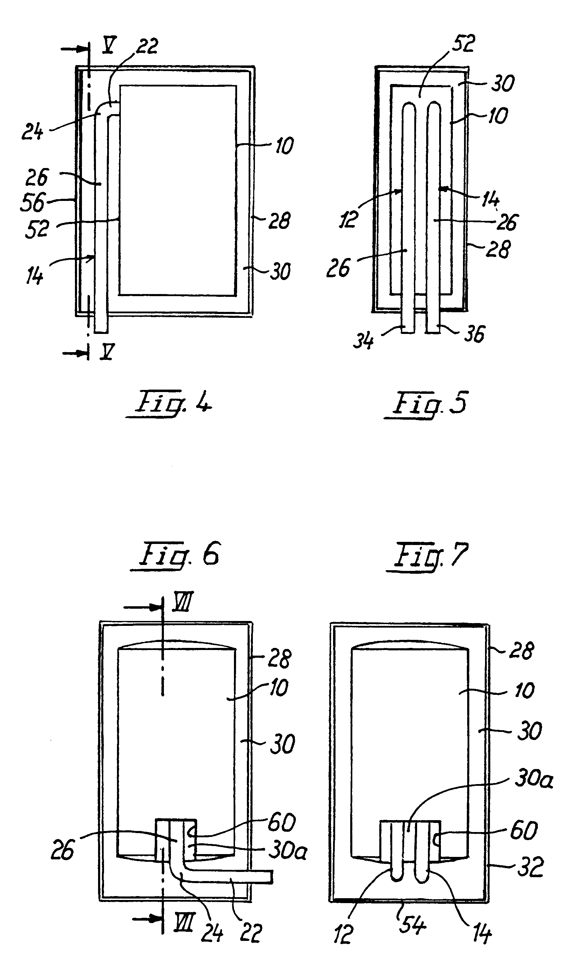

Je nach den örtlichen Einbauverhältnissen kann es zweckmäßig sein, von einer zylindrischen Form des Wärmespeichers abzugehen und eine Quaderform vorzuziehen, wodurch gegebenenfalls auch eine relativ flache Bauweise möglich wird. Die Fig. 4 und 5 zeigen eine derartige quaderförmige Bauweise eines Latentwärmespeichers, wobei der Wärmeispeicher außerdem in seiner Einbaulage so angeordnet ist, daß die längeren Kanten des Quaders in vertikaler Richtung verlaufen. Um eine möglichst große, im Bereich der Wärmeisolation verlaufende vertikale Länge der Leitungen 12 und 14 zu erreichen, treten auch hier diese Leitungen nahe dem oberen Ende des inneren Wärmespeichergehäuses 10 aus, und zwar im Bereich der schmalen Seitenwand 52. Die Leitungen 12 und 14 bestehen wie beim vorstehend beschriebenen Beispiel aus einem sich an das innere Gehäuse 10 anschließenden horizontalen Abschnitt 22, einem Bogen 24 und einem vertikalen Abschnitt 26 und treten in Form von Anschlußstutzen 34 und 36 aus der Bodenfläche 54 des äußeren Wärmespeichergehäuses 28 aus. Es besteht aber auch die Möglichkeit, die Leitungen 12 und 14 vor dem Erreichen der Bodenfläche 54 in Fig. 4 nach links abzuwinkeln und aus der der Seitenwand 52 gegenüberliegenden Seitenwand 56 des äußeren Wärmespeichergehäuses 28 austreten zu lassen, wenn dies den Einbaubedingungen besser gerecht wird, zumal sich bei dieser Bauform eine relativ große, isolierte, vertikale Länge der Leitungen 12 und 14 erzielen läßt.

Die Fig. 6 und 7 zeigen eine weitere mögliche Ausbildung am Beispiel eines zylindrischen Wärmespeichers mit in Einbaulage in vertikaler Richtung verlaufender Zylinderachse, wobei außerdem die Leitungen 12 und 14 nach unten aus dem inneren Wärmespeichergehäuse 10 herausgeführt sind. Um in diesem Fall ebenfalls eine ausreichende Höhe der Sperrschicht zu erreichen, ist die untere Stirnfläche 58 des inneren Wärmespeichergehäuses 10 in dem Bereich, in welchem die Leitungen 12 und 14 aus dem inneren Wärmespeichergehäuse 10 austreten, unter Bildung einer Tasche 60 nach oben eingezogen, so daß sich ein zusätzlicher Abschnitt 30a der die Wärmeisolation enthaltenden Kammer 30 ergibt, wobei die horizontale Querschnittsform der Tasche 60 derart gewählt ist, daß sich um die die Tasche 60 in vertikaler Richtung durchquerenden Abschnitte 26 der Leitungen 12 und 14 ein ausreichender Isoliermantel ergibt. Die Leitungen können entweder, wie beim Beispiel nach den Fig. 4 und 5 aus der unteren Bodenfläche 54 des äußeren Wärmespeichergehäuses 28 nach unten herausgeführt sein, sie können aber auch über Bögen 24 in horizontale Abschnitte 22 übergehen, die aus der äußeren Mantelfläche 32 des äußeren Wärmespeichergehäuses 28 seitlich herausgeführt sind.

Wenn der Wärmespeicher im inneren Wärmespeichergehäuse 10 eine gegenüber der Außentemperatur erhöhte Temperatur aufweist und die Kühlwasserzirkulation bei abgeschaltetem Motor stillgesetzt ist, wird sich das im Kühlwassersystem befindliche Wasser bzw. die Kühlflüssigkeit allmählich auf die Außentemperatur abkühlen, während aufgrund der erhöhten Wärmespeichertemperatur in den sich an den Wärmespeicher unmittelbar anschließenden Leitungsabschnitten Wasser bzw. Kühlflüssigkeit mit der Temperatur des Wärmespeichers anzutreffen ist. In den vertikalen Leitungsabschnitten innerhalb der Wärmeisolation wird die kalte Flüssigkeit wegen ihrer höheren Dichte unten und die warme Flüssigkeit wegen ihrer geringeren Dichte oben bleiben, so daß sich in diesen vertikalen Leitungsabschnitten eine Temperaturschichtung ausbildet, die zu einer ruhenden Sperrschicht zwischen der warmen und der kalten Flüssigkeit führt und eine Wärmeabfuhr durch Konvektion verhindert. Die obere Schicht des Kühlwassers in den vertikalen Leitungsabschnitten nimmt dabei die Temperatur des Kühlwassers in dem vom inneren Wärmespeichergehäuse 10 umschlossenen Speicherkern an, während die untere Schicht auf Umgebungstemperatur bzw. die Temperatur des äußeren Wärmespeichergehäuses 28 absinkt.

Dreht man die Anordnung um 180° um eine horizontale Achse, läßt sich der Wärmespeicher sinngemäß auch als Kältespeicher einsetzen.

**Patentansprüche**

1. Wärmespeicher, insbesondere Latentwärmespeicher für durch Motorabwärme gespeiste Kraftfahrzeugheizungen, mit einem einen Speicherkern umschließenden inneren Wärmespeichergehäuse (10), mit einem zur Umgebung abgrenzenden äußeren Wärmespeichergehäuse (28) und mit einer Wärmeisolierung (30, 30a) zwischen dem inneren (10) und dem äußeren (28) Wärmespeichergehäuse, welche durch eine Zuflußleitung (12) und eine Abflußleitung (14) für ein wärmetransportierendes Übertragungsmittel durchbrochen wird, *dadurch gekennzeichnet,* daß in der Einbaulage des Wärmespeichers die in das innere Wärmespeichergehäuse (10) mündenden Leitungen (12, 14) im Bereich der Wärmeisolierung (30, 30a) jeweils einen zumindest annähernd vertikalen Abschnitt (26) aufweisen, dessen oberes Ende mit dem inneren Wärmespeichergehäuse (10) verbunden ist und dessen vertikale Länge ausgehend von dem Temperaturgefälle zwischen dem Speicherkern und der Umgebung und der Wärmeleitfähigkeit des Übertragungsmittels so groß ist, daß eine ausreichend große Sperrschicht innerhalb der Wärmeisolierung zur Schaffung einer ausreichenden Isolationswirkung geschaffen wird, und daß dieser zumindest annähernd vertikale Abschnitt (26) quer zu seiner Längsachse sowohl gegenüber dem inneren (10) als auch gegenüber dem äußeren (28) Wärmespeichergehäuse wärmeisoliert ist.

2. Wärmespeicher nach Anspruch 1, dadurch gekennzeichnet, daß bei seitlich aus dem inneren Wärmespeichergehäuse (10) austretenden Leitungen (12, 14) die Leitungen nahe der oberen Begrenzung des inneren Wärmespeichergehäuses (10) mit einem von diesem Gehäuse (10) wegführenden Abschnitt (22) austreten und dann in einen innerhalb der Wärmeisolierung (30, 30a) zumindest annähernd vertikal nach unten geführten Abschnitt (26) übergehen.

3. Wärmespeicher nach Anspruch 2, dessen längste Abmessung in Einbaulage etwa horizontal verläuft, dadurch gekennzeichnet, daß zur Aufnahme der durch die Wärmeisolierung (30) geführten Leitungen (12, 14) das äußere Gehäuse (28) unter Beibehaltung seines vertikalen Querschnitts in horizontaler Richtung verlängert ist.

4. Wärmespeicher nach Anspruch 2, dessen längste Abmessung in Einbaulage etwa horizontal verläuft, dadurch gekennzeichnet, daß die von der Wand (18) des inneren Wärmespeichergehäuses (10) wegführenden Abschnitte (22) der Leitungen (12, 14) durch eine Öffnung (44) in der dieser Wand (18) gegenüberliegenden Wand (42) des äußeren Gehäuses (28) geführt sind und die etwa vertikal nach unten geführten Abschnitte (26) außerhalb des äußeren Gehäuses (28) angeordnet sind, daß der Rand (46) der Öffnung (44) allseits einen Abstand von den Leitungen einhält und daß sich an den Rand (46) der Öffnung (44) ein die Leitungen (12, 14) allseits mit Abstand umschließender, sich zumindest über einen Teil des nach unten geführten Abschnitts (26) der Leitungen erstreckender, durch eine von den Leitungen (12, 14) durchquerte Stirnwand (50) abgeschlossener Mantel (48) anschließt, der einen Abschnitt der Wärmeisolierung umschließt.

5. Wärmespeicher nach Anspruch 4, dadurch gekennzeichnet, daß der Mantel (48) die Zuflußleitung (12) und die Abflußleitung (14) gemeinsam umschließt.

6. Wärmespeicher nach Anspruch 4, dadurch gekennzeichnet, daß die Zuflußleitung (12) und die Abflußleitung (14) jeweils gesondert durch eine Öffnung des äußeren Gehäuses (28) geführt und von einem Mantel umschlossen sind.

7. Wärmespeicher nach Anspruch 1, dessen längste Abmessung in Einbaulage im wesentlichen etwa vertikal verläuft und bei welchem die Leitungen (12, 14) an der Unterseite des inneren Wärmespeichergehäuses (10) austreten, dadurch gekennzeichnet, daß die Unterseite (58) des inneren Wärmespeichergehäuses (10) mit einer nach oben eingezogenen Tasche (60) versehen ist, welche in etwa vertikaler Richtung von den Leitungen (12, 14) durchquert wird.

**Claims**

1. A heat storage means, more particularly a latent heat storage means for motor vehicle heating systems operated on engine waste heat, comprising an inner heat storage means housing (10) surrounding a storage core, an outer heat storage means housing (28) adjacent to the surroundings and thermal insulation (30 and 30a) between the inner (10) and the outer (28) heat storage means housings, which insulation is penetrated by a supply duct (12) and a drain duct (14) for a heat transfer medium, characterized in that in the installation position of the heat storage means the ducts (12 and 14) opening into the inner heat storage means housing (10) each have, adjacent to the thermal insulation (30 and 30a), an at least approximately vertical section (26), whose top end is connected with the inner heat storage means housing (10) and whose vertical length starting at the temperature gradient between the storage core and the surroundings and the thermal conductivity of the heat transfer medium are so great that a sufficiently large barrier layer is formed within the thermal insulation to ensure a sufficiently large insulating effect and that this at least approximately vertical section (26) is thermally insulated transversely in relation to its longitudinal axis both with respect to the inner (10) and also with respect to the outer (28) heat storage means housing.

2. The heat storage means as claimed in claim 1, characterized in that in the case of ducts (12 and 14) emerging laterally from the inner heat storage means housing (10) the ducts emerge adjacent to the upper limit of the inner heat storage means housing (10) in the form of a section (22) extending away from this housing (10) and then merge into a section (26) running at least approximately vertically downwards within the thermal insulation (30 and 30a).

3. The heat storage means as claimed in claim 2 whose maximum dimension in the installed position extends approximately horizontally, characterized in that for receiving the ducts (12 and 14) extending through the thermal insulation (30) the outer housing (28) is prolonged while maintaining its vertical cross section in the horizontal direction.

4. The heat storage means as claimed in claim 2, whose maximum dimension in the installed position extends approximately vertically, characterized in that the sections (22), extending away from the wall (18) of the inner heat storage means housing (10), of the ducts (12 and 14) are run through an opening (44) in the wall (42), which is opposite to this wall (18) of the outer housing (28) and the sections (26), which extend generally downwards, are arranged outside the outer housing (28), that the edge (46) of the opening (44) is clear of the ducts all the way around and that a casing (48), which extends over at least a part of the downwardly extending section (26) of the ducts and is terminated by bin end wall (50), which has the ducts (12 and 14) extending through it, is adjacent to the edge (46) of the opening (44) and surrounds a section of the thermal insulation.

5. The heat storage means as claimed in claim 4, characterized in that the casing (48) surrounds the supply duct (12) and the drain duct (14) jointly.

6. The heat storage means as claimed in claim 4, characterized in that the supply duct (12) and the drain duct (14) respectively extend separately through an opening in the outer housing (28) and are encompassed by a casing.

7. The heat storage means as claimed in claim 1, characterized in that whose maximum dimension in the position of installation is generally approximately vertical and in the case of which the ducts (12 and 14) emerge at the lower side of the inner heat storage means housing (10), characterized in that the lower side (58) of the inner heat storage means housing (10) is provided with an upwardly drawn pocket (60), which has the ducts (12 and 14) extending through it in a generally vertical direction.

## Revendications

1. Accumulateur de chaleur, en particulier accumulateur de chaleur latente pur des appareils de chauffage de véhicules automobiles alimentés par la chaleur du moteur, comportant un carter d'accumulateur de chaleur interne (10) entourant un noyau accumulateur, un carter d'accumulateur de chaleur externe (28) délimitant l'environnement, et une isolation thermique (30, 30a) entre les carters d'accumulateur de chaleur interne (10) et externe (28), cette isolation étant traversée par une canalisation d'admission (12) et une canalisation de retour (14) pour un fluide caloporteur, caractérisé en ce que les canalisations (12, 14) débouchant dans le carter d'accumulateur de chaleur interne (10), présentent respectivement, dans la zone de l'isolation thermique (30, 30a) un tronçon (26) au moins sensiblement vertical dont l'extrémité supérieure est reliée au carter d'accumulateur de chaleur interne (10) et dont la longeur verticale est suffisamment grande, en fonction de la chute de température entre le noyau accumulateur et l'environnement et de la conductibilité calorifique du fluide caloporteur, pour que soit créée une couche de barrage suffisamment grande, à l'intérieur de l'isolation thermique, pour produire un effet isolant suffisant, et en ce que ce tronçon (26) au moins sensiblement vertical est isolé thermiquement, perpendiculairement à son axe longitudinal, aussi bien vis-à-vis du carter d'accumulateur de chaleur interne (10) que du carter d'accumulateur de chaleur externe (28).

2. Accumulateur de chaleur suivant la revendication 1 caractérisé en ce que, dans le cas de canalisations (12, 14) sortant latéralement du carter d'accumulateur de chaleur interne (10) ces canalisations sortent, à proximité de la limite supérieure du carter d'accumulateur de chaleur interne (10), par un tronçon (22) s'étendant à partir de ce carter (10) et elles se continuent ensuite par un tronçon (26) s'étendant vers le bas, au moins sensiblement vertical, à l'intérieur de l'isolation thermique (30, 30a).

3. Accumulateur de chaleur suivant la revendication 2, dont la plus grande dimension, en position de montage, s'étend sensiblement horizontalement, caractérisé en ce que le carter externe (28) est prolongé dans la direction horizontale, en conservant sa section transversale verticale, pour recevoir les canalisations (12, 14) passant à travers l'isolation thermique (30).

4. Accumulateur de chaleur suivant la revendication 2 dont la plus grande dimension, en position de montage, s'étend sensiblement horizontalement, caractérisé en ce que les tronçons (22) des canalisations (12, 14) qui s'étendent à partir de la paroi (18) du carter d'accumulateur de chaleur interne (10), passent à travers une ouverture (44) formée dans la paroi (42) du carter externe (28) qui est située en regard de la paroi (18), et les tronçons (26) qui s'étendent sensiblement verticalement vers le bas, sont disposés a l'extérieur du carter externe (28), en ce que le bord (46) de l'ouverture (44) est situé, de tous les côtés, à distance des canalisations et en ce qu'au bord (46) de l'ouverture (44) se raccorde une enveloppe (48) qui entoure à distance, de tous les côtes, les canalisations (12, 14) qui s'étend au moins le long d'une partie du tronçon (26) des canalisations s'étendant vers le bas, et qui est fermée par une paroi frontale (50) traversée par les canalisations (12, 14), cette enveloppe (48) enfermant une portion de l'isolation thermique.

5. Accumulateur de chaleur suivant da revendication 4 caractérisé en ce que l'enveloppe (48) enferme conjointement la canalisation d'admission (12) et la canalisation de retour (14).

6. Accumulateur de chaleur suivant la revendication 4 caractérisé en ce que la canalisation d'admission (12) et la canalisation de retour (14) passent respectivement chacune à travers une ouverture du carter externe (28) et sont entourées chacune par une enveloppe.

7. Accumulateur de chaleur suivant la revendication 1, dont la plus grande dimension, en position de montage, s'étend essentiellement sensiblement dans le sens vertical et dans lequel les canalisations (12, 14) sortent du côté inférieur du carter d'accumulateur de chaleur interne (10), caractérisé en ce que le côté inférieur (58) du carter d'accumulateur de chaleur interne (10) est porvu d'une poche (60) formée vers le haut, laquelle est traversée par les canalisations (12, 14), sensiblement dans la direction verticale.

FIG.1

FIG. 2

FIG.3

_Fig._ 4

_Fig._ 5

_Fig._ 6

_Fig._ 7